# EUROPEAN PATENT SPECIFICATION

(11) **EP 3 220 070 B1**
(45) Date of publication and mention of the grant of the patent: **12.06.2019**
(21) Application number: 14905669.9
(22) Date of filing: 12.11.2014
(51) Int. Cl.: F24F 11/65, F24F 11/54, F24F 11/46, F24F 11/89

(54) **AIR-CONDITIONER MANAGEMENT APPARATUS AND AIR CONDITIONING SYSTEM**
KLIMAANLAGENVERWALTUNGSVORRICHTUNG UND KLIMAANLAGE
APPAREIL DE GESTION DE CLIMATISEUR ET SYSTÈME DE CLIMATISATION

(43) Date of publication of application: 20.09.2017
(73) Proprietor: Mitsubishi Electric Corporation, Chiyoda-ku Tokyo 100-8310 (JP)
(72) Inventor: SATO, Yasushi, Tokyo 100-8310 (JP)
(74) Representative: Pfenning, Meinig & Partner mbB
(86) International application number: PCT/JP2014/079932
(87) International publication number: WO 2016/075769

(56) References cited:
- WO-A1-2014/167837
- JP-A- 2010 032 073
- JP-A- 2010 032 073
- JP-A- 2011 241 990
- US-A1- 2007 203 860
- US-A1- 2008 083 834

## Description

### Technical Field

The present invention relates to an air-conditioning management apparatus and an air-conditioning system configured to control operation of a plurality of air conditioners.

### Background Art

Due to a rise in atmospheric temperature caused by global warming, as well as demands from power companies to reduce amounts of power consumption, reduction in amounts of power consumption and improvement of a level of comfort are currently required in constructions, for example, buildings. Various methods for realizing such reduction and improvement have been proposed. There is given an air-conditioning system including a plurality of outdoor units and a plurality of indoor units, which is configured to perform power-saving control in addition to normal control as a type of operation control (see, for example, Patent Literature 1). JP2010032073 discloses an air-conditioning management apparatus according to the preamble of claim 1.

### Citation List

### Patent Literature

Patent Literature 1: Japanese Unexamined Patent Application Publication No. 2006-125691 (Abstract)

### Summary of Invention

### Technical Problem

The above-mentioned air-conditioning system of the related art is configured such that shift from the normal control to the power-saving control is performed based on a manual instruction by a user, which requires time and effort. Therefore, a method for automatically shifting from the normal control to the power-saving control is desired. The power-saving control is generally carried out when an air conditioner load is small. Therefore, in automating the shift of control, there is conceived a method of setting a load condition that allows shift from the normal control to the power-saving control so that, when each of the surrounding environments (load states) of a plurality of indoor units satisfies the load condition, shift from the normal control to the power-saving control is automatically performed. However, the above-mentioned method has the following problems.

Specifically, the surrounding environments of the plurality of indoor units are not always the same as each other even when the plurality of indoor units are installed in the same room. Because of this, for example, when the surrounding environments of some of the indoor units are poor (specifically, for example, the indoor units are installed by a window and are liable to be influenced by outside air), it may take a long time for the surrounding environments of those indoor units to satisfy the load condition. In such a case, there is a problem in that the air-conditioning system as a whole cannot shift to the power-saving control even under such a load state that it is generally preferred that the air-conditioning system shift to an energy-saving operation, resulting in no energy-saving effect being achieved.

Further, in general, the power-saving control is control for achieving a reduction in power consumption by suppressing air-conditioning capability, and hence excessive suppression of the air-conditioning capability reduces a level of comfort. Therefore, it is important that the power-saving control not only simply achieve reduction in power consumption but also maintain the level of comfort.

The present invention has been made in view of the above-mentioned problems and has an object to provide an air-conditioning management apparatus and an air-conditioning system of achieving power saving while maintaining a level of comfort.

### Solution to Problem

According to one embodiment of the present invention, there is provided an air-conditioning management apparatus configured to control operation of a plurality of air conditioners each including a plurality of indoor units, the air-conditioning management apparatus including: a control unit configured to, during normal control of maintaining an indoor temperature at a set temperature, carry out air-conditioning control of shifting control from the normal control to power-saving control when each of pieces of load data respectively indicating surrounding environments of the plurality of indoor units satisfies a specific load condition, in which, even in a case in which pieces of load data of some of the plurality of indoor units do not satisfy the load condition, the control unit shifts the control to the power-saving control when it is predicted, based on history of past operation state data of the some of the plurality of indoor units, that a level of comfort of an indoor environment does not decrease due to the shift to the power-saving control.

Further, according to one embodiment of the present invention, there is provided an air-conditioning system, including: the air-conditioning management apparatus described above; and a plurality of air conditioners to be controlled by the air-conditioning management apparatus.

### Advantageous Effects of Invention

According to one embodiment of the present invention, the air-conditioning management apparatus and the air-conditioning system capable of achieving power saving while maintaining the level of comfort can be obtained.

### Brief Description of Drawings

Fig. 1 is a block diagram for illustrating an entire configuration of an air-conditioning system including an air-conditioning management apparatus according to Embodiment 1 of the present invention.
Fig. 2 is a table for showing an example of a control setting database of Fig. 1.
Fig. 3 is a table for showing an example of an air-conditioning control database of Fig. 1.
Fig. 4 is a table for showing an example of an operation state database of Fig. 1.
Fig. 5 is a table for showing an example of a divergence determination database of Fig. 1.
Fig. 6 is a flowchart for illustrating a flow of processing in the air-conditioning management apparatus according to Embodiment 1 of the present invention.

### Description of Embodiments

### Embodiment 1

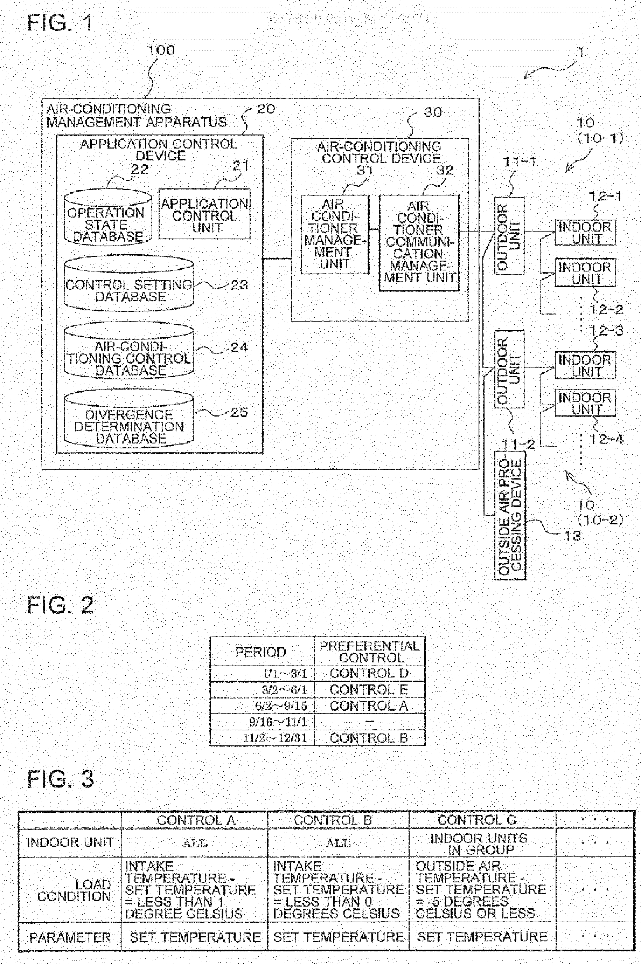

Fig. 1 is a block diagram for illustrating an entire configuration of an air-conditioning system including an air-conditioning management apparatus according to Embodiment 1 of the present invention.

In Fig. 1, an air-conditioning system 1 includes a plurality of air conditioners 10-1 and 10-2 (hereinafter also collectively referred to as air conditioners 10), and an air-conditioning management apparatus 100 configured to comprehensively control operation of the plurality of air conditioners 10 to be responsible for reduction in power consumption and increase in level of comfort in the air-conditioning system 1. The air-conditioning system 1 further includes an outside air processing device 13 configured to incorporate outside air into a room through a fan. The outside air processing device 13 may be omitted.

The plurality of air conditioners 10-1 and 10-2 include outdoor units 11-1 and 11-2 (hereinafter also collectively referred to as outdoor units 11) and a plurality of indoor units 12-1, 12-2, 12-3, and 12-4 (hereinafter also collectively referred to as indoor units 12).

In the air conditioners 10, the outdoor units 11 and the plurality of indoor units 12 are connected to each other via a dedicated communication line or a LAN. Each of the outdoor units 11 and each of the indoor units 12 transmits operation state data relating to the respective operation states of each of the outdoor units 11 and each of the indoor units 12 to the air-conditioning management apparatus 100. The operation state includes, for example, "in operation", "operation stopped", "operation mode" (distinguishing between heating and cooling), "airflow speed", "air flow rate", "set temperature", "intake temperature" (indoor air temperature), "outside air temperature", "operation disabled state", or "humidifying state".

The air-conditioning management apparatus 100 is connected to each of the outdoor units 11 via a communication line, for example, a dedicated communication line or a LAN, and transmits/receives data to/from each of the outdoor units 11 via the communication line. Further, the air-conditioning management apparatus 100 transmits/receives data to/from each of the indoor units 12 via the outdoor units 11, respectively. The air-conditioning management apparatus 100 transmits to each of the outdoor units 11 and each of the indoor units 12 a signal for controlling operation or stop of at least each of the indoor units 12 and each of the outdoor units 11, respectively. The air-conditioning management apparatus 100 further transmits to the outside air processing device 13 a signal for controlling start and stop of the outside air processing device 13. Although not illustrated in Fig. 1, the air-conditioning management apparatus 100 may have a configuration in which the air conditioners 10 are divided into a plurality of groups so that each group can be controlled. Any method for division into groups may be used, and one group may be provided for each room, or one room may be divided into separate areas each serving as one group.

Now, a configuration of the air-conditioning management apparatus 100 is described.

The air-conditioning management apparatus 100 includes an application control device 20 configured to determine control content (evaporating temperature, number of revolutions of a compressor, set temperature, air flow rate, direction of air flow, operation start, operation stop, or other content) of the air conditioners 10, and an air-conditioning control device 30 configured to control the air conditioners 10 and the outside air processing device 13 based on the control content determined by the application control device 20. Each of the devices in the application control device 20 and the air-conditioning control device 30 may be realized independently of each other in different devices, or may be installed in the same device. Although not illustrated in Fig. 1, the air-conditioning system 1 further includes a humidifier and a ventilation device. The humidifier and the ventilation device may be connected to the air-conditioning management apparatus 100 via a communication line, for example, a dedicated communication line or a LAN so as to be managed by the air-conditioning management apparatus 100.

### (Air-conditioning Control Device)

The air-conditioning control device 30 includes an air conditioner management unit 31 and an air conditioner communication management unit 32. The air-conditioning control device 30 includes a microcomputer with a CPU, a RAM, a ROM, and other similar hardware, and a control program is stored in the ROM. The air conditioner management unit 31 is functionally configured by the CPU and the control program. The air conditioner communication management unit 32 can be realized by a network interface, for example, a LAN interface, or hardware for dedicated communication.

The air conditioner management unit 31 is configured to acquire operation state data transmitted from the outdoor units 11 and the indoor units 12 via the air conditioner communication management unit 32, to thereby manage the operation states of the air conditioners 10 based on the operation state data. A part or all of the operation state data received by the air conditioner management unit 31 is transmitted to the application control device 20 and stored in an operation state database 22 to be described later.

The air conditioner communication management unit 32 is configured to communicate information between the air conditioner management unit 31, each of the outdoor units 11, and each of the indoor units 12. The air conditioner communication management unit 32 transmits data from the air conditioner management unit 31 to the air conditioners 10 and the outside air processing device 13, further receives data from the air conditioners 10 or other devices, and transmits this data to the air conditioner management unit 31. Moreover, data held by the air conditioner management unit 31 and the air conditioner communication management unit 32 may be held in a device capable of storage, such as a hard disk drive (HDD) or a flash memory.

### (Application Control Device)

The application control device 20 includes an application control unit 21, the operation state database 22, a control setting database 23, an air-conditioning control database 24, and a divergence determination database 25.

The application control unit 21 may be realized by hardware, for example, a circuit device which realizes functions, or as software implemented on a computer such as a microcomputer or a CPU. The application control unit 21 stores the control program including a program corresponding to a flowchart described later. The application control device 20 may also be realized in a storage device on a network.

The application control unit 21 includes normal control and power-saving control as types of operation control of the air-conditioning system 1. The normal control is control of controlling various units (for example, a compressor, a pressure reducing device, and an air-sending device) forming the air conditioners 10 so as to maintain an intake temperature of the indoor units 12 at a set temperature set by a user. The power-saving control is control carried out for the purposes of saving power and maintaining the level of comfort, and includes controlling, for example, the evaporating temperature and the number of revolutions of the compressor so as to reduce power consumption by each air conditioner 10 or the total air-conditioning system 1. It is to be understood that the power-saving control may further include control of other items of the air-conditioning system 1. In other words, the power-saving control only needs to be control carried out for the purpose of maintaining the level of comfort while reducing total power consumption of the air-conditioning system.

Now, the power-saving control is described in more detail.

The application control unit 21 carries out the power-saving control based on surrounding environment data on each of the indoor units 12, the set temperature of each of the indoor units 12, data held by the respective databases 23 to 25 in the application control device 20, or other such data.

The application control unit 21 includes a plurality of types of control (control A to control E) as the power-saving control, and selects any one type of control from those types of control A to control E. The control A is control of lowering the air-conditioning capability by increasing the evaporating temperature. The control B is control of lowering the air-conditioning capability by lowering the frequency of the compressor. The control C differs from the power-saving control of the air conditioners 10, and is power-saving control (outside air introduction control) using the outside air processing device 13, in which the operation of the air conditioners 10 is stopped in order to drive the outside air processing device 13. The above-mentioned types of control are merely examples and are not intended to limit the power-saving control used in the present invention. The control D and the control E are not described in detail, and may be any type of control capable of realizing power-saving. The number of types of power-saving control available for selection is not limited to five and may be set freely. For example, the number of types may be one or more than five.

A load condition is set for each type of power-saving control. The load condition is a shift condition for determining whether or not to shift from the normal control to the power-saving control. Specifically, during the normal control, the application control unit 21 shifts the control from the normal control to the power-saving control when the surrounding environments (temperature and humidity environment) of each of the indoor units 12 satisfy the load condition corresponding to the power-saving control that is currently selected.

Here, during the normal control, there may occur a state in which a surrounding environment of one indoor unit 12 of the indoor units 12 does not satisfy the load condition, and hence the control is not shifted to the power-saving control and the normal control is continued for no reason. In the case of a cooling operation, for example, a specific indoor unit 12, for example, a window-side indoor unit 12 installed close to a window, of the plurality of indoor units 12 has a high load due to being exposed to sunlight. Therefore, the intake temperature of the indoor air in the window-side indoor unit 12 is less likely to fall compared to the intake temperature of the other indoor units 12. In this case, for example, when the load condition is a condition that a temperature difference obtained by subtracting the set temperature from the intake temperature is less than a predetermined value, the control is not shifted to the power-saving control because the window-side indoor unit 12 does not satisfy the load condition, and thus the normal control is continued and no power saving is achieved.

In this embodiment, control of improving the above-mentioned state is carried out. Now, an outline of the control in this embodiment is described. First, the surrounding environments of each of the plurality of indoor units 12 are detected to identify the indoor unit 12 which is the cause of the control not shifting to the power-saving control based on load data (for example, the temperature difference between the intake temperature and the set temperature) of each of the indoor units 12 based on the result of detection. Then, the load data of the identified indoor unit 12 is corrected so that the load data satisfies the load condition for shifting to the power-saving control. In this way, the state in which the control does not shift to the power-saving control can be avoided, and power saving can be achieved.

When the load data is corrected despite the identified indoor unit 12 not actually satisfying the load condition in order to, so to speak, "forcibly" shift to the power-saving control, there is a fear that the level of comfort of the surrounding environment of the identified indoor unit 12 decreases. In order to deal with this problem, in this embodiment, the control is only shifted to the power-saving control when it can be predicted that the level of comfort of the indoor environment does not decrease even if the control is shifted to the power-saving control.

Specifically, when a state in which the surrounding environment of the identified indoor unit 12, which is the cause of the control not shifting to the power-saving control, diverges from the load condition has continued for a certain past period of time, it is determined that the level of comfort of the indoor environment does not decrease, and hence the control is shifted to the power-saving control. A state in which the surrounding environment of the identified indoor unit 12 diverges from the condition for shifting to the power-saving control for the certain past period of time corresponds to, for example, a state described below when the condition is described using an example in which the load condition is "the temperature difference between the intake temperature and the set temperature is less than 1 degree Celsius". Specifically, the state corresponds to a state of insufficient capability in which, in the window-side indoor unit 12 during the cooling operation, the intake temperature does not fall below the set temperature due to a relationship between an amount of sunlight from the window and the air-conditioning capability of the indoor unit 12, and a state in which the intake temperature is, for example, 2 degrees Celsius higher than the set temperature continues.

In this case, even when the temperature difference (load data) is corrected by correcting the set temperature of the window-side indoor unit 12 to increase the temperature by, for example, 2 degrees Celsius so that the window-side indoor unit 12 also satisfies the load condition, the intake temperature of the window-side indoor unit 12 ultimately stays at 27 degrees Celsius even when the air-conditioning system 1 shifts to the power-saving control. In other words, the level of comfort of the surrounding environment of the window-side indoor unit 12 essentially does not change even when the control shifts to the power-saving control. Therefore, even when there is an indoor unit (identified indoor unit) 12 which does not satisfy the load condition, the application control unit 21 allows the shift to the power-saving control when the state in which the surrounding environment of the identified indoor unit 12 corresponds to a divergence condition that the surrounding environment diverges from the load condition continues for a certain period of time. The load data may be corrected by correcting a parameter (the set temperature in the above-mentioned example) used for calculating the load data in the manner described above to correct the load data. Alternatively, the load data (in this example, the temperature difference between the intake temperature and the set temperature) of the identified indoor unit 12 may be corrected directly.

Here, through setting of a restriction of "continue for a certain period of time" for the divergence condition, the following effect is obtained. Specifically, when this restriction is not set, for example, the control shifts to the power-saving control even when the surrounding environment only temporarily corresponds to the divergence condition due to a sudden increase in the number of people in a room. In this case, an inconvenience may occur in which the level of comfort of the surrounding environment of the identified indoor unit 12 decreases. However, this inconvenience can be avoided by setting the above-mentioned restriction, and it is thus possible to maintain the level of comfort.

Next, referring back to Fig. 1, the various databases included in the application control device 20 are described in sequence.

Fig. 2 is a table for showing an example of the control setting database of Fig. 1.

The control setting database 23 associates periods obtained by dividing one year into a plurality of periods with preferential control from among the plurality of types of power-saving control (control A, control B, control C, ...) that is preferentially carried out in each period, and stores the preferential control. Five periods are set as the periods in Fig. 2, but more or less periods may be set. Further, a period may not be set. The preferential control of the control setting database 23 may be set by automatically selecting one type of control from the plurality of types of control A to E in accordance with the environment, or may be set by a user.

Fig. 3 is a table for showing an example of the air-conditioning control database of Fig. 1.

In the air-conditioning control database 24, for every type of power-saving control (control A, control B, control C, ...), there are set "indoor unit" specifying a unit of control of the power-saving control, "load condition" specifying the load condition for shifting to the power-saving control, and "parameter" specifying data to be corrected.

In the example of Fig. 3, the control A is set so as to be carried out when the load condition that the temperature difference obtained by subtracting the set temperature from the intake temperature is less than 1 degree Celsius is satisfied for all of the respective indoor units 12. The control B is set so as to be carried out when the load condition that the temperature difference obtained by subtracting the set temperature from the intake temperature is less than 0 degrees Celsius is satisfied for all of the respective indoor units.

Further, the control C is set so as to be carried out when the condition that the temperature difference obtained by subtracting the set temperature from the outside air temperature is -5 degrees Celsius or less is satisfied for each indoor unit 12 in a specific group. When the temperature difference obtained by subtracting the set temperature from the outside air temperature is -5 degrees Celsius or less, in order to cause the room temperature to drop below the current temperature, it is possible to lower the room temperature by incorporating the outside air into the room without operating the air conditioners 10. Therefore, when the outside air temperature is lower than the set temperature by 5 degrees Celsius or more, the control C is carried out. That is, control of stopping the operation of the air conditioners 10 to drive the outside air processing device 13 which incorporates the outside air is carried out as described above. The outside air processing device 13 operates with lower power consumption than the air conditioners 10, and hence driving of the outside air processing device 13 in place of the air conditioners 10 saves power.

Further, in Fig. 3, the "parameter" for all of the types of control A to C is the set temperature, and designates that the set temperature is corrected when the load data in the identified indoor unit 12 which does not satisfy the load condition is corrected.

The air-conditioning control database 24 may be provided by a manufacturer in advance, or may be set and changed by the user. New types of control may also be added to the air-conditioning control database 24. Further, the load conditions and parameters of Fig. 3 are merely examples and are not limited to those shown in Fig. 3.

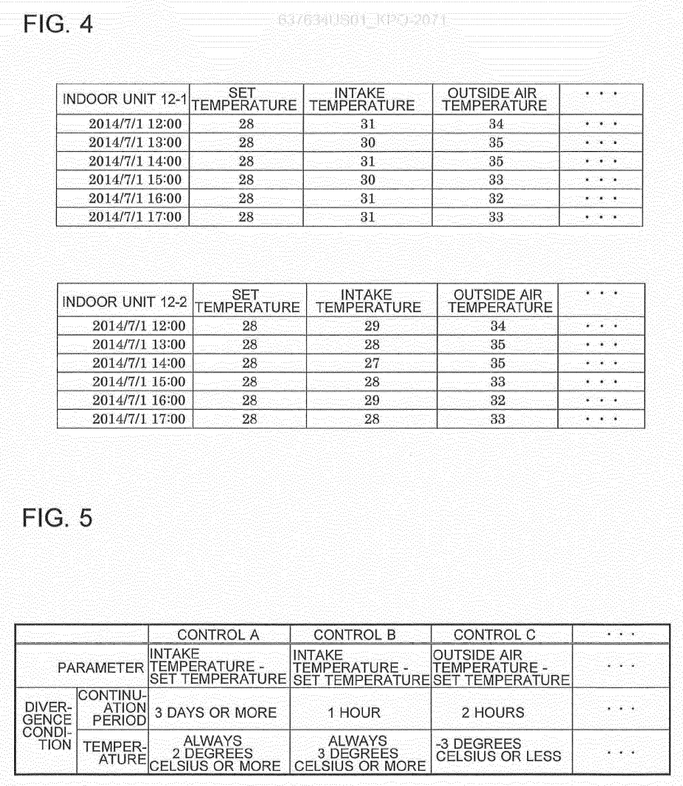

Fig. 4 is a table for showing an example of the operation state database of Fig. 1.

The operation state database 22 includes a table in which history of the operation state data for each of the indoor units 12 is accumulated. The table stores "set temperature", "intake temperature", "outside air temperature", and other operation state data (for example, operation stop state, air flow rate, air flow direction, operation disabled state, humidifying state, and operation mode) as the operation state data. New operation state data is registered in the table when, for example, a fixed time is reached.

Fig. 4 is an illustration of an example in which the operation state database 22 holds a table for each indoor unit 12, but the operation state database 22 may hold a table in which the air conditioners 10 are grouped as one unit. Further, items other than the above-mentioned items may be stored in the operation state database 22. For example, the device acquires the outside air temperature, the set temperature, the intake temperature, and other values every, for example, one minute, and thus data such as an average value of intake temperatures within the past hour, a minimum value of the set temperature, and a maximum value of the outside air temperature may further be included in the operation state data.

Fig. 5 is a table for showing an example of the divergence determination database of Fig. 1.

In the divergence determination database 25, "parameter" and "divergence condition" are set for each type of power-saving control. The "divergence condition" includes the items "continuation period" and "temperature". Taking the control A as an example, in the case of the control A, the indoor unit 12 having the temperature difference between the intake temperature and the set temperature designated in "parameter" of constantly 2 degrees Celsius or more for 3 consecutive days is identified as the indoor unit 12 corresponding to the divergence condition. The divergence condition of Fig. 5 is merely an example and is not limited to that shown in Fig. 5.

The above-mentioned operation state database 22, control setting database 23, air-conditioning control database 24, and divergence determination database 25 may be configured by a storage device such as an HDD or a flash memory.

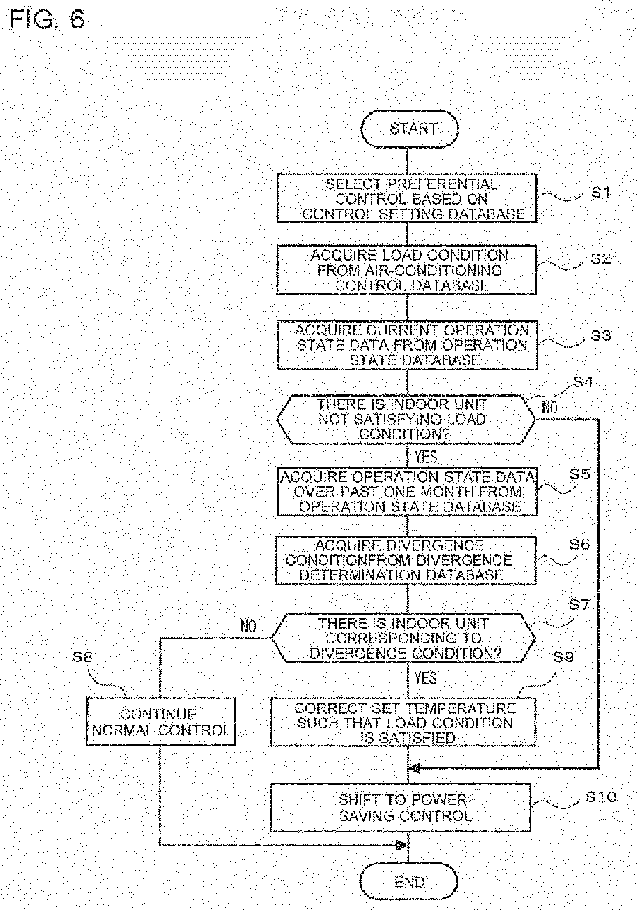

Fig. 6 is a flowchart for illustrating a flow of processing in the air-conditioning management apparatus according to Embodiment 1 of the present invention. The processing of the flowchart of Fig. 6 may be carried out periodically (for example, every 30 minutes or every hour), or may be carried out when an event occurs. The event corresponds to, for example, an event when an operation button on a screen (not shown) of the air-conditioning management apparatus 100 is pressed, and an event where a change notification indicating that a state has changed is received from the air conditioner 10. In the following, processing that is carried out when the application control unit 21 acquires the operation state data from the air conditioners 10 at a fixed time and registers the operation state data in the operation state database 22 is described. Further, it is assumed that the air conditioners 10 are operating under the normal control.

The application control unit 21 of the air-conditioning management apparatus 100 selects which type of power-saving control is to be preferentially carried out among the plurality of types of power-saving control based on the control setting database 23 (S1). The type of power-saving control is not limited to being selected automatically based on the control setting database 23, and may be selected based on a designation by a user.

Next, the application control unit 21 acquires the load condition corresponding to the type of power-saving control selected in Step S1 from the air-conditioning control database 24 (S2). Then, the application control unit 21 acquires current operation state data of each of the indoor units 12 specified in the item "indoor unit" of the air-conditioning control database 24 from the operation state database 22 (S3). Next, based on the current operation state data of each of the indoor units 12 acquired in Step S3, the application control unit 21 checks whether or not there is an indoor unit 12 which does not satisfy the load condition acquired in Step S2 (S4).

When the application control unit 21 determines that there is no indoor unit (identified indoor unit) 12 which does not satisfy the load condition, the application control unit 21 shifts the control to the power-saving control (S10). On the other hand, when the application control unit 21 determines that there is the identified indoor unit 12 which does not satisfy the load condition, the application control unit 21 acquires operation state data of the identified indoor unit 12 over the past month from the operation state database 22 (S5).

Next, the application control unit 21 acquires the divergence condition corresponding to the type of power-saving control selected in Step S1 from the divergence determination database 25 (S6), and checks whether or not the identified indoor unit 12 corresponds to the divergence condition based on the operation state data over the past month acquired in Step S5 (S7). Here, the period for searching for the indoor unit 12 which corresponds to the divergence condition is set to the past month, but the period may be freely changed.

When, as a result of the check in Step S7, the application control unit 21 determines that the identified indoor unit 12 does not correspond to the divergence condition, the normal control is continued without change (S8). On the other hand, when the application control unit 21 determines that the identified indoor unit 12 corresponds to the divergence condition, the application control unit 21 corrects the set temperature designated in the item "parameter" of the air-conditioning control database 24 such that the load data of the identified indoor unit 12 satisfies the load condition acquired in Step S2 (S9). When there is more than one corresponding indoor unit 12, the correction is performed for each indoor unit 12.

Through execution of the above-mentioned correction, the load data of each of the indoor units 12 is changed to satisfy the load condition, and the application control unit 21 shifts the control to the type of power-saving control selected in Step S1 (S10).

Taking specific examples into consideration, control of the air-conditioning management apparatus 100 is now described based on the databases 23 to 25 of Fig. 3 to Fig. 5.

### (Example 1)

For example, for July 1st, the application control unit 21 selects the power-saving control of the control A based on the control setting database 23. Then, based on the air-conditioning control database 24, the application control unit 21 identifies that the control is shifted from the normal control to the power-saving control of the control A when the temperature difference obtained by subtracting the set temperature from the intake temperature is less than 1 degree Celsius for all of the indoor units 12.

Then, while operating under the normal control, the application control unit 21 checks whether or not there is an indoor unit 12 out of all the indoor units 12 which does not satisfy the load condition, that is, an indoor unit 12 having the temperature difference obtained by subtracting the set temperature from the intake temperature of 1 degree Celsius or more. Here, assuming that the indoor unit 12-1 has the temperature difference obtained by subtracting the set temperature from the intake temperature of 1 degree Celsius or more, the application control unit 21 then checks whether or not the indoor unit 12-1 corresponds to the divergence condition corresponding to the control A based on the operation state data of the indoor unit 12-1 over the past month. Here, it is assumed that the state in which the indoor unit 12-1 has the temperature difference obtained by subtracting the set temperature from the intake temperature of 2 degrees Celsius or more has continued for 3 or more days and thus the indoor unit 12-1 corresponds to the divergence condition. In this case, the application control unit 21 corrects the set temperature of the indoor unit 12-1 such that the indoor unit 12-1 satisfies the load condition that the temperature difference of the indoor unit 12-1 obtained by subtracting the set temperature from the intake temperature is less than 1 degree Celsius.

Through the above-mentioned correction, all of the indoor units 12 satisfy the load condition, and the application control unit 21 shifts the control from the normal control to the power-saving control of the control A. That is, control of reducing the air-conditioning capability by increasing the evaporating temperature to a temperature higher than the current temperature is carried out. As a result, power consumption can be reduced.

### (Example 2)

In this example, it is assumed that the application control unit 21 selects the power-saving control of the control C. Then, based on the air-conditioning control database 24, the application control unit 21 recognizes that the control is shifted from the normal control to the power-saving control of the control C for each group when a temperature difference obtained by subtracting the set temperature from the outside air temperature of each indoor unit 12 in the group is -5 degrees Celsius or less.

Then, while operating under the normal control, the application control unit 21 checks each of the indoor units 12 in each group to check whether or not there is an indoor unit 12 which does not satisfy the load condition, that is, an indoor unit 12 having the temperature difference obtained by subtracting the set temperature from the outside air temperature of more than -5 degrees Celsius. Here, when the indoor unit 12-1 corresponds to this condition, the application control unit 21 further checks whether or not the indoor unit 12-1 corresponds to the divergence condition corresponding to the control C based on the operation state data of the indoor unit 12-1 over the past month. Here, it is assumed that a state in which the temperature difference in the indoor unit 12-1 obtained by subtracting the set temperature from the outside air temperature is -3 degrees Celsius or less has continued for 2 hours or more and thus the indoor unit 12-1 corresponds to the divergence condition. When the indoor unit 12-1 corresponds to the divergence condition, it can be predicted that the level of comfort of the room does not decrease even if the control shifts to the control C (outside air processing control). Therefore, the application control unit 21 corrects the set temperature of the indoor unit 12-1 such that the indoor unit 12-1 satisfies the load condition that the temperature difference obtained by subtracting the set temperature from the outside air temperature is -5 degrees Celsius or less.

Through the above-mentioned correction, all of the indoor units 12 satisfy the load condition, and the application control unit 21 shifts the control from the normal control to the power-saving control of control C. In other words, operation of the air conditioners 10 is stopped in order to perform outside air introduction control of driving the outside air processing device 13. As a result, power consumption can be reduced.

In the above description, an exemplary case is described in which the number of indoor units which are the cause of the control not shifting to the power-saving control is one, but this number is not limited to one and may be two or more.

As described above, according to this embodiment, even when the load data of some of the indoor units 12 does not satisfy the load condition, the surrounding environments of each of the corresponding indoor units 12 are checked based on the past operation state data of those indoor units 12, and the control is shifted to the power-saving control when it is predicted that the level of comfort does not decrease. Specifically, the control is shifted to the power-saving control in a case in which some of the indoor units 12 do not satisfy the load condition due to insufficient capability in relation to the surrounding environments (including a case in which the surrounding environments are bad). Therefore, regardless of whether or not the level of comfort can be maintained in the power-saving control, an inconvenience in which the normal control is continued for no reason can be avoided. As a result, the number of times the power-saving control is implemented is increased, and it is thus possible to obtain the air-conditioning management apparatus 100 capable of improving the effect of reducing the amount of power consumption.

In the above description, a cooling operation is used as an example, but the present invention may also be applied to a heating operation.

### Reference Signs List

1 air-conditioning system 10 air conditioner10-1 air conditioner 10-2 air conditioner 11 outdoor unit 11-1 outdoor unit 11-2 outdoor unit 12 indoor unit 12-1 indoor unit 12-2 indoor unit 12-3 indoor unit 12-4 indoor unit 13 outside air processing device 20 application control device 21 application control unit 22 operation state database 23 control setting database 24 air-conditioning control database 25 divergence determination database 30 air-conditioning control device 31 air conditioner management unit 32 air conditioner communication management unit 100 air-conditioning management apparatus

## Claims

1. An air-conditioning management apparatus (100) configured to control operation of a plurality of air conditioners (10) each including a plurality of indoor units (12), the air-conditioning management apparatus (100) comprising:
a controller (21) configured to, during normal control of maintaining an indoor temperature at a set temperature, carry out air-conditioning control of shifting control from the normal control to power-saving control when each of pieces of load data respectively indicating surrounding environments of the plurality of indoor units (12) satisfies a specific load condition,
**characterized in that** even in a case in which pieces of load data of some including one of the plurality of indoor units (12) do not satisfy the specific load condition, the controller (21) shifts the control to the power-saving control when it is predicted, based on a history of past operation state data of the some including one of the plurality of indoor units (12), that a level of comfort of an indoor environment does not decrease due to the shift to the power-saving control.

2. The air-conditioning management apparatus (100) of claim 1, wherein, when respective air-conditioning capabilities of the some including one of the plurality of indoor units (12) are insufficient due to the surrounding environments of the some including one of the plurality of indoor units (12), the controller (21) predicts that the level of comfort of the indoor environment does not decrease and shifts the control to the power-saving control.

3. The air-conditioning management apparatus (100) of claim 1 or 2, wherein,
the piece of load data includes a temperature difference between an intake temperature of each of the plurality of indoor units (12) and the set temperature of each of the plurality of indoor units (12), and
the controller (21) is configured to predict that the level of comfort of the indoor environment does not decrease, and shift the control to the power-saving control when a state in which the temperature difference is larger than a temperature difference set in the specific load condition continues for a preset continuation period.

4. The air-conditioning management apparatus (100) of any one of claims 1 to 3, wherein,
the controller (21) includes a plurality of types of control as the power-saving control,
the specific load condition is set for each of the plurality of types of control, and
the controller (21) is configured to select any one of the plurality of types of control to carry out the air-conditioning control based on the selected one of the plurality of types of control and the specific load condition corresponding to the selected one of the plurality of types of control.

5. The air-conditioning management apparatus (100) of claim 4, wherein, when selecting the any one of the plurality of types of control, the controller (21) refers to control setting data, which is set for each of various periods obtained by dividing one year into a plurality of periods in correspondence with the any one of the plurality of types of control, to select a type of control that corresponds to a current period.

6. The air-conditioning management apparatus (100) of claim 4 or 5, wherein
the controller (21) is configured to further control an outside air processing device (13) configured to incorporate outside air into a room,
the controller (21) further includes, as one type of the plurality of types of power-saving control, outside air introduction control of stopping the operation of the plurality of air conditioners (10) and driving the outside air processing device (13), thereby approximating intake temperatures of the plurality of indoor units (12) to the set temperature through the incorporation of the outside air into the room, and
the controller (21) is configured to shift the control from the normal control to the outside air introduction control
when load data of each of the plurality of indoor units (12) satisfies a specific load condition, and
when it is predicted that the level of comfort of the indoor environment does not decrease due to the shift to the outside air introduction control even in a case in which some including one of the plurality of indoor units (12) do not satisfy the specific load condition for shifting to the outside air introduction control.

7. An air-conditioning system, comprising:
the air-conditioning management apparatus (100) of any one of claim 1 to 5; and
a plurality of air conditioners (10) to be controlled by the air-conditioning management apparatus (100).

8. An air-conditioning system, comprising:
the air-conditioning management apparatus (100) of claim 6;
a plurality of air conditioners (10) to be controlled by the air-conditioning management apparatus (100); and
an outside air processing device (13) configured to incorporate outside air into a room in which the plurality of air conditioners (10) are installed.

## Patentansprüche

1. Klimatisierungsmanagementvorrichtung (100), die konfiguriert ist zum Steuern des Betriebs mehrerer Klimaanlagen (10), die jeweils mehrere Inneneinheiten (12) enthalten, welche Klimatisierungsmanagementvorrichtung (100) aufweist:
eine Steuervorrichtung (21), die konfiguriert ist zum Durchführen, während normaler Steuerung des Aufrechterhaltens einer Innentemperatur auf einer gesetzten Temperatur, einer Klimatisierungssteuerung des Verschiebens der Steuerung von einer normalen Steuerung zu einer energiesparenden Steuerung, wenn jedes von Stücken von Lastdaten, die jeweils das umgebende Umfeld der mehreren Inneneinheiten (12) anzeigen, einer spezifischen Lastbedingung genügt,
**dadurch gekennzeichnet, dass**
selbst in einem Fall, in welchem Stücke von Lastdaten von einigen, inklusiver einer, der mehreren Inneneinheiten (12) nicht einer spezifischen Lastbedingung genügen, die Steuervorrichtung (21) die Steuerung zu der energiesparenden Steuerung verschiebt, wenn auf der Grundlage einer Historie von vergangenen Betriebszustandsdaten der einigen, inklusive einer, der mehreren Inneneinheiten (12) vorhergesagt wird, dass ein Komfortpegel eines Innenumfelds nicht aufgrund der Verschiebung zu der energiesparenden Steuerung abnimmt.

2. Klimatisierungsmanagementvorrichtung (100) nach Anspruch 1, bei der, wenn jeweilige Klimatisierungsfähigkeiten der einigen, inklusive einer, der mehreren Inneneinheiten (12) aufgrund des umgebenden Umfelds der einigen, inklusive einer, der mehreren Inneneinheiten (12) unzureichend sind, die Steuervorrichtung (21) vorhersagt, dass der Komfortpegel des Innenumfelds nicht abnimmt, und die Steuerung zu der energiesparenden Steuerung verschiebt.

3. Klimatisierungsmanagementvorrichtung (100) nach Anspruch 1 oder 2, bei der
das Stück von Lastdaten eine Temperaturdifferenz zwischen einer Einlasstemperatur jeder der mehreren Inneneinheiten (12) und der gesetzten Temperatur jeder der mehreren Inneneinheiten (12) enthält und
die Steuervorrichtung (21) konfiguriert ist zum Vorhersagen, dass der Komfortpegel des Innenumfelds nicht abnimmt, und zum Verschieben der Steuerung zu der energiesparenden Steuerung, wenn ein Zustand, in welchem die Temperaturdifferenz größer als eine unter der spezifischen Lastbedingung gesetzte Temperaturdifferenz ist, während einer voreingestellten Fortsetzungsperiode fortgesetzt wird.

4. Klimatisierungsmanagementvorrichtung (100) nach einem der Ansprüche 1 bis 3, bei der
die Steuervorrichtung (21) mehrere Typen von Steuerung als die Energiesparsteuerung enthält,
die spezifische Lastbedingung für jeden der mehreren Typen von Steuerung gesetzt ist und
die Steuervorrichtung (21) konfiguriert ist zum Auswählen irgendeines der mehreren Typen von Steuerung, um die Klimatisierungssteuerung auf der Grundlage des ausgewählten einen der mehreren Typen von Steuerung und der spezifischen Lastbedingung entsprechend dem ausgewählten einen der mehreren Typen von Steuerung durchzuführen.

5. Klimatisierungsmanagementvorrichtung (100) nach Anspruch 4, bei der,
wenn der irgendeine der mehreren Typen von Steuerung ausgewählt wird, die Steuervorrichtung (21) sich auf Steuersetzdaten bezieht, die für jede von verschiedenen Perioden, die durch Teilen eines Jahres in mehrere Perioden erhalten wurden, entsprechend dem irgendeinen der mehreren Typen von Steuerung gesetzt sind, um einen Typ von Steuerung auszuwählen, der einer gegenwärtigen Periode entspricht.

6. Klimatisierungsmanagementvorrichtung (100) nach Anspruch 4 oder 5, bei der
die Steuervorrichtung (21) konfiguriert ist, weiterhin eine Außenluft-Verarbeitungsvorrichtung (13), die konfiguriert ist, Außenluft in einem Raum aufzunehmen, zu steuern,
die Steuervorrichtung (21) weiterhin als einen Typ der mehreren Typen von Energiesparsteuerung eine Außenluft-Einführungssteuerung des Anhaltens des Betriebs der mehreren Klimaanlagen (10) und des Betreibens der Außenluft-Verarbeitungsvorrichtung (13) enthält, wodurch Einlasstemperaturen der mehreren Inneneinheiten (12) durch die Aufnahme der Außenluft in den Raum der gesetzten Temperatur angenähert werden, und
die Steuervorrichtung (21) konfiguriert ist zum Verschieben der Steuerung von der normalen Steuerung zu der Außenluft-Einführungssteuerung,
wenn Lastdaten jeder der mehreren Inneneinheiten (12) einer spezifischen Lastbedingung genügen und
wenn vorhergesagt wird, dass der Komfortpegel des Innenumfelds nicht aufgrund der Verschiebung zu der Außenluft-Einführungssteuerung selbst in einem Fall abnimmt, in welchem einige, inklusive einer, der mehreren Inneneinheiten (12) nicht der spezifischen Lastbedingung zum Verschieben zu der Außenluft-Einführungssteuerung genügen.

7. Klimatisierungssystem, welches aufweist:
die Klimatisierungsmanagementvorrichtung (100) nach einem der Ansprüche 1 bis 5; und
mehrere Klimaanlagen (10), die durch die Klimatisierungsmanagementvorrichtung (100) zu steuern sind.

8. Klimatisierungssystem, welches aufweist:
die Klimatisierungsmanagementvorrichtung (100) nach Anspruch 6;
mehrere Klimaanlagen (10), die durch die Klimatisierungsmanagementvorrichtung (100) zu steuern sind; und
eine Außenluft-Verarbeitungsvorrichtung (13), die konfiguriert ist, Außenluft in einen Raum aufzunehmen, in welchem mehrere Klimaanlagen (10) installiert sind.

## Revendications

1. Appareil de gestion de climatisation (100) qui est configuré de manière à ce qu'il commande le fonctionnement d'une pluralité de climatiseurs (10) dont chacun inclut une pluralité d'unités intérieures (12), l'appareil de gestion de climatisation (100) comprenant :
un contrôleur (21) qui est configuré de manière à ce qu'il, pendant une commande normale de maintien d'une température intérieure à une température de consigne, mette en oeuvre une commande de climatisation qui consiste à faire passer la commande de la commande normale à une commande d'économie d'énergie lorsque chacun d'éléments de données de charge qui indiquent respectivement des milieux environnants de la pluralité d'unités intérieures (12) satisfait une condition de charge spécifique ;
**caractérisé en ce que** :
même dans un cas dans lequel des éléments de données de charge de certaines unités intérieures qui incluent l'une de la pluralité d'unités intérieures (12) ne satisfont pas la condition de charge spécifique, le contrôleur (21) fait passer la commande à la commande d'économie d'énergie lorsqu'il est prédit, sur la base d'un historique de données d'état de fonctionnement passées des certaines unités intérieures qui incluent l'une de la pluralité d'unités intérieures (12), qu'un niveau de confort de l'environnement intérieur ne diminue pas du fait du passage à la commande d'économie d'énergie.

2. Appareil de gestion de climatisation (100) selon la revendication 1, dans lequel, lorsque des capacités de climatisation respectives des certaines unités intérieures qui incluent l'une de la pluralité d'unités intérieures (12) sont insuffisantes du fait des milieux environnants des certaines unités intérieures qui incluent l'une de la pluralité d'unités intérieures (12), le contrôleur (21) prédit que le niveau de confort de l'environnement intérieur ne diminue pas et il fait passer la commande à la commande d'économie d'énergie.

3. Appareil de gestion de climatisation (100) selon la revendication 1 ou 2, dans lequel :
l'élément de données de charge inclut une différence de température entre une température d'admission de chacune de la pluralité d'unités intérieures (12) et la température de consigne de chacune de la pluralité d'unités intérieures (12) ; et
le contrôleur (21) est configuré de manière à ce qu'il prédise que le niveau de confort de l'environnement intérieur ne diminue pas, et de manière à ce qu'il fasse passer la commande à la commande d'économie d'énergie lorsqu'un état dans lequel la différence de température est plus importante qu'une différence de température qui est réglée au niveau de la condition de charge spécifique se poursuit pendant une période de continuation préréglée.

4. Appareil de gestion de climatisation (100) selon l'une quelconque des revendications 1 à 3, dans lequel :
le contrôleur (21) inclut une pluralité de types de commande en tant que commande d'économie d'énergie ;
la condition de charge spécifique est réglée pour chacun de la pluralité de types de commande ; et
le contrôleur (21) est configuré de manière à ce qu'il sélectionne l'un quelconque de la pluralité de types de commande de manière à ce qu'il mette en oeuvre la commande de climatisation sur la base de celui sélectionné de la pluralité de types de commande et de la condition de charge spécifique qui correspond à celui sélectionné de la pluralité de types de commande.

5. Appareil de gestion de climatisation (100) selon la revendication 4, dans lequel, lors de la sélection de l'un quelconque de la pluralité de types de commande, le contrôleur (21) se réfère à des données de réglage de commande qui sont réglées pour chacune de diverses périodes qui sont obtenues en divisant une année selon une pluralité de périodes en correspondance avec celui quelconque de la pluralité de types de commande, de manière à ce qu'il sélectionne un type de commande qui correspond à une période courante.

6. Appareil de gestion de climatisation (100) selon la revendication 4 ou 5, dans lequel :
le contrôleur (21) est configuré de manière à ce qu'il commande en outre un dispositif de traitement de l'air extérieur (13) qui est configuré de manière à ce qu'il incorpore de l'air extérieur à l'intérieur d'une pièce ;
le contrôleur (21) inclut en outre, en tant qu'un type de la pluralité de types de commande d'économie d'énergie, une commande d'introduction d'air extérieur qui consiste à arrêter le fonctionnement de la pluralité de climatiseurs (10) et à piloter le dispositif de traitement de l'air extérieur (13), ce qui permet par voie de conséquence que des températures d'admission de la pluralité d'unités intérieures (12) s'approchent de la température de consigne par l'intermédiaire de l'incorporation de l'air extérieur à l'intérieur de la pièce ; et
le contrôleur (21) est configuré de manière à ce qu'il fasse passer la commande de la commande normale à la commande d'introduction d'air extérieur
lorsque des données de charge de chacune de la pluralité d'unités intérieures (12) satisfont une condition de charge spécifique ; et
lorsqu'il est prédit que le niveau de confort de l'environnement intérieur ne diminue pas du fait du passage à la commande d'introduction d'air extérieur même dans un cas dans lequel certaines unités intérieures qui incluent l'une de la pluralité d'unités intérieures (12) ne satisfont pas la condition de charge spécifique pour le passage à la commande d'introduction d'air extérieur.

7. Système de climatisation, comprenant :
l'appareil de gestion de climatisation (100) selon l'une quelconque des revendications 1 à 5 ; et
une pluralité de climatiseurs (10) qui doivent être commandés au moyen de l'appareil de gestion de climatisation (100).

8. Système de climatisation, comprenant :
l'appareil de gestion de climatisation (100) selon la revendication 6 ;
une pluralité de climatiseurs (10) qui doivent être commandés au moyen de l'appareil de gestion de climatisation (100) ; et
un dispositif de traitement de l'air extérieur (13) qui est configuré de manière à ce qu'il incorpore de l'air extérieur à l'intérieur d'une pièce dans laquelle les climatiseurs de la pluralité de climatiseurs (10) sont installés.
